# EUROPÄISCHE PATENTSCHRIFT

(11) **EP 3 898 009 B1**
(45) Veröffentlichungstag und Bekanntmachung des Hinweises auf die Patenterteilung: **24.01.2024**
(21) Anmeldenummer: 19824282.8
(22) Anmeldetag: 12.12.2019
(51) Int. Cl.: H02S 50/10, G06Q 50/06, B23K 20/10, G06Q 10/04, B06B 3/00, H02S 50/00, H02J 3/00

(54) **ULTRASCHALLSCHWEISSANLAGE MIT HALTERUNG**
ULTRASONIC WELDING SYSTEM HAVING A RETAINER
INSTALLATION DE SOUDAGE PAR ULTRASONS DOTÉE D'UN SYSTÈME DE RETENUE

(30) Priorität: 19.12.2018 DE 102018132838
(43) Veröffentlichungstag der Anmeldung: 27.10.2021
(73) Patentinhaber: Herrmann Ultraschalltechnik GmbH & Co. KG, 76307 Karlsbad (DE)
(72) Erfinder: ZENDLER, Stefan, 75334 Straubenhardt (DE); VOGLER, Ulrich, 88690 Uhldingen-Mühlhofen (DE); POHL, Johannes, 76275 Ettlingen (DE); MANCINI, Raffaele, 76189 Karlsruhe (DE)
(74) Vertreter: WSL Patentanwälte Partnerschaft mbB
(86) Internationale Anmeldenummer: PCT/EP2019/084942
(87) Internationale Veröffentlichungsnummer: WO 2020/126842

(56) Entgegenhaltungen:
- EP-A1- 2 267 765
- DE-A1-102010 049 571
- DE-A1-102013 103 887
- DE-T2- 69 515 921
- DE-T5-112016 003 596

## Beschreibung

Die vorliegende Erfindung betrifft eine Ultraschallschweißanlage mit einer Ultraschallschwingeinheit, die eine Sonotrode und einen Konverter aufweist. Die Sonotrode und der Konverter sind entlang einer Längsachse nebeneinander angeordnet und derart aufeinander abgestimmt, dass die Ultraschallschwingeinheit mit einer Ultraschallschwingung in Richtung der Längsachse mit einer Frequenz f = v/ λ in Resonanz gebracht werden kann, wobei v die Ausbreitungsrichtung der akustischen Ultraschallschwingung innerhalb der Ultraschallschwingeinheit und λ die Wellenlänge der Ultraschallschwingung ist. In diesem Fall bildet sich in der Ultraschallschwingeinheit eine stehende Welle mit Schwingungsknoten und Schwingungsmaxima aus. Im einfachsten Fall zeigt die Sonotrode genau einen Schwingungsknoten und zwei Schwingungsmaxima, d.h. die Sonotrode hat eine Länge, die der halben Wellenlänge λ/2 der Resonanzschwingung entspricht.

In der Regel weist die Ultraschallschweißanlage einen Amboss auf, wobei das zu bearbeitende Material zwischen der Siegelfläche der Sonotrode und der Siegelfläche des Amboss angeordnet wird. Der Amboss wird auch als Gegenwerkzeug bezeichnet. Häufig ist zwischen Sonotrode und Konverter ein Amplitudentransformator angeordnete, welcher die Amplitude der von dem Konverter erzeugte Ultraschallschwingung verändert, die Frequenz jedoch nicht verändert.

Für die Bearbeitung muss die Ultraschallschwingeinheit gehalten werden. Daher weist die Ultraschallschweißanlage eine entsprechende Halterung auf.

Die Anforderungen an die Schweißqualität nehmen immer weiter zu. Darüber hinaus gibt es Materialien, wie z.B. Metalle, bei deren schweißender Bearbeitung es zu einem erheblichen Verschleiß an den Siegelflächen der Sonotrode kommt, wodurch es notwendig wird, die Sonotrode häufig auszutauschen. Vereinzelt sind bereits Wendesonotroden mit mehreren Siegelflächen vorgeschlagen worden, bei denen die Sonotrode nachdem eine Siegelfläche verschlissen worden ist, gedreht werden kann, um mit einer anderen Siegelfläche weiter zu arbeiten.

Um insbesondere beim Metallschweißen eine hohe Schweißqualität zu erzielen, ist es notwendig, die Siegelflächen der Sonotrode und des Ambosses sehr exakt parallel zueinander zu positionieren. Insbesondere die parallele Positionierung der Ultraschallschwingeinheit bzw. der Siegelfläche der Sonotrode relativ zum Amboss ist bei den bekannten Ultraschallschweißanlagen sehr aufwendig und kann häufig nur von speziell geschultem Personal durchgeführt werden, was insbesondere bei häufigem Austausch der Sonotrode zu störenden Unterbrechungen des Bearbeitungsprozesses führt. Daran ändert auch die Verwendung von Wendesonotroden nichts, da die Sonotrode nach jedem Wenden erneut exakt parallel zum Amboss positioniert werden muss. Dabei ist die axiale und radiale Positionierung der Sonotrode von großer Bedeutung.

Falls die Sonotrode ausgetauscht oder gedreht werden muss, um eine andere Siegelfläche parallel zum Gegenwerkzeug auszurichten, ist meist die vollständige Demontage der Ultraschallschwingeinheit notwendig, was zeitaufwendig ist und eine erneute Justierung erfordert. Insbesondere die Halterung ist kompliziert aufgebaut und erlaubt keine einfache und schnelle Demontage der Ultraschallschwingeinheit.

Aus der EP 2 267 765 A1 ist eine Halterung für eine Ultraschallschwingungseinheit bekannt, die die Ultraschallschwingungseinheit an einer zusätzlichen Position abstützt, sodass der Resonator kontinuierlich mit einer bestimmten Frequenz schwingen kann und somit die Ultraschallschwingung zielgerichtet auf das zu bearbeitende Objekt einwirken kann. Aus der DE 11 2016 003 596 T5 ist eine weitere Haltestruktur eines Ultraschallschwingungsübertragungsmechanismus bekannt. Ein Befestigungsmittel für ein Schwingungsglied wird außerdem in der DE 695 15 921 T2 beschrieben.

In der DE 10 2013 103 887 A1 wird weiter eine Ultraschallschweißvorrichtung beschrieben, wobei die Sonotrode im Abstand von λ/4 von einem Schweißbereich oder einem zu diesem benachbarten Bereich in einer ersten Lagerung abgestützt ist. Dazu weist die Lagerung einen Vorsprung auf, der in einem in Längsrichtung der Sonotrode verlaufenden Schnitt eine u-förmige Geometrie mit Seitenschenkeln und diese verbindendem Querschenkeln aufweist, wobei der Vorsprung in eine der u-förmigen Geometrien angepasste Aussparung der Sonotrode eingreift, wobei die Sonotrode flächig auf dem Querschenkel des Vorsprungs abgesetzt ist und wobei über zumindest einen Seitenschenkel des Vorsprungs eine axiale Ausrichtung der Sonotrode erfolgt.

DE 10 2010 049571 A1 offenbart wenigstens eine Hülse mit Schlitzen, welche eine polare Halterung, in welcher die Ultraschallschwingeinheit justiert ist, hält.

Es ist daher Aufgabe der vorliegenden Erfindung, eine Ultraschallschweißanlage mit einer Halterung bereitzustellen, die eine einfache Justierung der Ultraschallschwingeinheit sowie deren einfachen Austausch erlaubt.

Erfindungsgemäß wird diese Aufgabe durch eine Ultraschallschweißanlage mit einer Ultraschallschwingeinheit gemäß Anspruch 1 gelöst. Die Halterung weist eine Klemmvorrichtung auf, welche zwischen einer geöffneten Position, in welcher die Ultraschallschwingeinheit aus der Halterung entnommen werden kann, und einer geschlossenen Position, in welcher die Klemmvorrichtung mit der Ultraschallschwingeinheit in Kontakt tritt und eine Kraft auf diese ausübt, so dass die Ultraschallschwingeinheit gehalten wird, hin und her bewegbar ist, wobei die Klemmvorrichtung als Hülse mit einer Innen- und einer Außenfläche ausgebildet worden ist, wobei die Innenfläche korrespondierend zu einer Außenfläche eines Abschnittes der Ultraschallschwingeinheit ausgebildet ist, wobei die Hülse einen Schlitz aufweist, der die Außenfläche der Hülse mit der Innenfläche der Hülse verbindet, so dass die Hülse zwei gegenüberliegende Schlitzwände aufweist, die den Schlitz begrenzen, wobei eine Spannvorrichtung vorgesehen ist, mit welcher die Schlitzwände aufeinander zu bewegt werden können, wodurch die Klemmvorrichtung in die geschlossene Position gebracht wird und der von der Innenfläche umgrenzte Raum reduziert und die Ultraschallschwingeinheit innerhalb der Hülse geklemmt wird.

Zum Austausch der Ultraschallschwingeinheit oder zu deren Justierung kann somit die Klemmvorrichtung in die geöffnete Position gebracht werden, was eine Bewegung der Ultraschallschwingeinheit relativ zur Halterung erlaubt. Sobald die Ultraschallschwingeinheit in der gewünschten Position ist, kann die Klemmvorrichtung in die geschlossene Position gebracht werden, um die Ultraschallschwingeinheit in der gewünschten Position zu fixieren.

In einer bevorzugten Ausführungsform tritt die Klemmvorrichtung in der geschlossenen Position an zumindest zwei voneinander beabstandeten Haltepunkten mit der Ultraschallschwingeinheit in Kontakt. Durch das in Kontakt treten an zwei voneinander beanstanden Haltepunkten kann die Stabilität der Ultraschallschwingeinheit in der geschlossenen Position verbessert werden.

In einer weiteren bevorzugten Ausführungsform ist die Spannvorrichtung eine Schraube ist, welche durch eine in einer Schlitzwand eingebrachte Durchgangsstufenbohrung in eine in einer anderen Schlitzwand eingebrachte Gewindebohrung greift.

In einer Ausführungsform ist die Innenfläche der Hülse und somit die Au ßenfläche des Abschnittes der Ultraschallschwingeinheit, welcher mit der Innenfläche der Hülse in Kontakt tritt, vorzugsweise zylindrisch ausgebildet. Dies hat den Vorteil, dass, wenn die Klemmvorrichtung in ihrer geöffneten Position ist, die gesamte Ultraschallschwingeinheit innerhalb der Klemmvorrichtung um Ihre Längsachse gedreht werden kann. Sobald die Ultraschallschwingeinheit in der gewünschten Drehposition ist, kann die Klemmvorrichtung in die geschlossene Position gebracht werden, um die Ultraschallschwingeinheit umschließend zu klemmen und damit zu halten.

In einer bevorzugten Ausführungsform sind ein Abschnitt der Außenfläche der Ultraschallschwingeinheit und die Innenfläche der Hülse derart aufeinander abgestimmt, dass dann, wenn die Schlitzwände sich berühren, die Ultraschallschwingeinheit sicher von der Klemmvorrichtung gehalten, ohne dass es zu einer plastischen Verformung der Ultraschallschwingeinheit kommt.

In einer bevorzugten Ausführungsform weist die Ultraschallschwingeinheit einen Außenwulst auf, mit dem die Halteeinrichtung in der geschlossenen Position in Kontakt tritt. Es hat sich als vorteilhaft herausgestellt, wenn der Außenwulst an dem Amplitudentransformator angeordnet ist.

In einer weiteren bevorzugten Ausführungsform ist vorgesehen, dass der Außenwulst einen T-förmigen Querschnitt aufweist mit einem Steg und einem sich beidseitig im rechten Winkel von einem Ende des Stegs erstreckenden Flansch, wobei vorzugsweise der Flansch mindestens einen umlaufenden Bund aufweist, mit welchen die Klemmeinrichtung in der geschlossenen Position in Kontakt tritt. Dadurch kann die Halterung von der Ultraschallschwingungen der Ultraschallschwingeinheit weitestgehend entkoppelt werden. Am besten ist der Steg im Bereich eines Schwingungsknotens der Resonanzschwingung angeordnet.

In einer weiteren bevorzugten Ausführungsform ist die Sonotrode mit dem Konverter und/oder der Amplitudentransformator mit dem Konverter und/oder der Amplitudentransformator mit der Sonotrode über eine formschlüssige Verbindung, die einen Formschluss in allen Richtungen der zur Längsachse senkrechten Ebene bereitstellt, verbunden. Mit Vorteil erlaubt die formschlüssige Verbindung eine Relativbewegung in Richtung der Längsachse.

Beispielsweise kann die formschlüssige Verbindung aus einem Zapfen und einer korrespondierenden Aussparung bestehen, wobei, wenn ein Amplitudentransformator vorgesehen ist, vorzugsweise der Zapfen an dem Amplitudentransformator und die korrespondierende Aussparung an der Sonotrode oder dem Konverter angeordnet ist.

Im Folgenden wird davon ausgegangen, dass zwischen Sonotrode und Konverter ein Amplitudentransformator vorhanden ist und die formschlüssige Verbindung zwischen Sonotrode und Amplitudentransformator vorgesehen ist. Dies ist die bevorzugte Anordnung. Sie ermöglicht den einfachen Austausch der Sonotrode, ohne dass Amplitudentransformator und Konverter aus der Halterung entfernt werden müssen. Grundsätzlich wäre es jedoch auch möglich, auf den Amplitudentransformator zu verzichten und die Sonotrode direkt am Konverter zu befestigen oder den Amplitudentransformator mit der formschlüssigen Verbindung am Konverter zu befestigen. Alle Vorteile und weiteren Merkmale können daher auch bei einer formschlüssigen Verbindung zwischen Sonotrode und Konverter oder zwischen Amplitudentransformator und Konverter verwirklicht werden, auch wenn diese im Folgenden nur anhand der formschlüssigen Verbindung zwischen Sonotrode und Amplitudentransformator beschrieben werden.

Der Zapfen kann einfach in die korrespondierende Ausnehmung eingesteckt werden, um eine Positionierung der Sonotrode relativ zu dem Amplitudentransformator zu ermöglichen.

Der Zapfen und die korrespondierende Aussparung sind vorzugsweise nicht rotationssymmetrisch zur Längsachse ausgebildet, sodass eine Drehpositionierung der Sonotrode gegenüber dem Amplitudentransformator oder dem Konverter gegenüber dem Amplitudentransformator durch die formschlüssige Verbindung erfolgt. Alternativ können auch mehrere Zapfen und hierzu korrespondierende Aussparungen vorgesehen sein. Dabei sollte der Zapfen oder die Zapfen derart ausgebildet sein, dass der Amplitudentransformator nur in definierten Drehwinkelpositionen mit der Sonotrode oder dem Konverter in Eingriff gebracht werden kann.

Dabei haben in einer besonders bevorzugten Ausführungsform der Zapfen und die korrespondierende Aussparung eine Drehsymmetrie um die Längsachse mit einer n-zähligen Drehachse.

Bei einer 2-zähligen Drehachse kann die Sonotrode um 180° (360°/2) um die Längsachse gedreht werden und in dieser Position wieder mit dem Amplitudentransformator verbunden werden. Bei einer n-zähligen Drehachse kann die Sonotrode um 360°/n (z.B. 120° bei einer 3-zähligen Drehachse) um die Längsachse gedreht werden und in dieser Position wieder mit dem Amplitudentransformator verbunden werden.

Ist die Sonotrode als Wendesonotrode drehsymmetrisch um die Längsachse mit einer m-zähligen Drehachse ausgebildet, so ist vorzugsweise m = n. Mit anderen Worten kann der Amplitudentransformator nur in n definierten Drehwinkelpositionen mit der Sonotrode oder dem Konverter in Eingriff gebracht werden.

Diese formschlüssige Verbindung erlaubt in der Regel eine axiale Bewegbarkeit zwischen Amplitudentransformator einerseits und Sonotrode oder Konverter andererseits. Um die Elemente fest miteinander zu verbinden, kann beispielsweise der Amplitudentransformator eine Gewindebohrung und die Sonotrode oder der Konverter eine Durchgangsstufenbohrung aufweisen, so dass mit einer die Durchgangsbohrung durchgreifenden Schraube, welche in die Gewindebohrung eingreift, eine axiale Befestigung erfolgen kann.

Alternativ könnte die Aussparung auch auf den Zapfen aufgeschrumpft werden.

In einer weiteren bevorzugten Ausführungsform ist vorgesehen, dass Zapfen und korrespondierende Aussparung konusförmig ausgebildet sind oder einen konusförmigen Abschnitt aufweisen. Die Konusform dient einerseits zum Zentrieren der Verbindung zwischen Sonotrode und Amplitudentransformator oder der Verbindung zwischen Amplitudentransformator und Konverter. Andererseits kann die Verbindung über die Konusform selbsthemmend ausgeführt sein. Daher ist eine Konuswinkel von maximal 2° von Vorteil.

In einer weiteren bevorzugten Ausführungsform ist ein Abstützelement zum Abstützen einer senkrecht zur Längsachse auf die Sonotrode aufgebrachten Kraft vorgesehen, wobei Sonotrode und Abstützelement zueinander korrespondierende Abstützflächen aufweisen, die zumindest dann, wenn eine Kraft senkrecht zur Längsachse auf die Sonotrode ausgeübt wird, miteinander in Kontakt treten, wobei die Abstützflächen derart ausgebildet sind, dass sie, wenn sie miteinander in Kontakt stehen eine Relativbewegung der Sonotrode gegenüber dem Abstützelement in Richtung der Längsachse verhindern und eine Drehung der Sonotrode um die Längsachse nicht behindern.

Das Abstützelement muss daher im Grunde genommen lediglich einmalig positioniert werden. Durch die erfindungsgemäße Anordnung der korrespondierenden Abstützflächen muss die Sonotrode lediglich mit ihrer Abstützfläche an die korrespondierende Abstützfläche des Abstützelementes gelegt werden, um die Ultraschallschwingeinheit in axialer Richtung zu positionieren. Die Winkelposition kann danach festgelegt werden, da das Abstützelement eine Drehung der Sonotrode um ihre Längsachse zumindest in einem gewissen Umfang erlaubt.

Diese Ausführungsform ist zusätzlich insbesondere dann von Vorteil, wenn die Ultraschallschwingeinheit nicht an der Sonotrode, sondern am Konverter oder einem zwischen Sonotrode und Konverter zwischengeschalteten Amplitudentransformator gehalten wird, da dann die während des Schweißens auf die Sonotrode ausgeübte Kraft eine große Hebelwirkung aufweist, die mit Hilfe des Abstützelementes aufgefangen werden kann. Selbst wenn die Siegelflächen von Sonotrode und Amboss exakt parallel zueinander ausgerichtet sind, ändert sich dies, wenn die Sonotrode quer zur Längsachse mit einem Biegemoment belastet wird. Dies ist immer dann der Fall, wenn die Siegelfläche der Sonotrode nicht senkrecht zur Längsachse positioniert ist. Insbesondere beim Metallschweißen ist die Siegelfläche der Sonotrode meist derart orientiert, dass eine Normale auf der Siegelfläche einen rechten Winkel mit der Längsachse einschließt. Da beim Metallschweißen auch relativ hohe Kräfte ausgeübt werden müssen, kommt es zu einer Durchbiegung der Ultraschallschwingeinheit mit der Folge, dass die Siegelfläche der Sonotrode nicht mehr exakt parallel zur Siegelfläche des Amboss ausgerichtet ist, wodurch die Schweißqualität herab gesetzt wird. Zusätzlich können durch große Biegemomente auch die Komponenten der Ultraschallschwingeinheit beschädigt werden, was es zu vermeiden gilt. Durch das Abstützelement wird die Durchbiegung und damit die Abweichung von der Parallelität reduziert und eine Beschädigung von Komponenten der Halterung oder der Ultraschallschwingeinheit vermieden.

Beispielsweise kann die Sonotrode eine Rippe und das Abstützelement eine Nut aufweisen, die zum Abstützen ineinander greifen. Alternativ kann die Sonotrode auch die Nut und das Abstützelement die Rippe aufweisen. Rippe und Nut haben dann korrespondierende Abstützflächen. Vorzugsweise ist die Rippe oder die Nut der Sonotrode in einem Schwingungsknoten der Resonanzschwingung angeordnet. Die Anordnung im Schwingungsknoten hat den Vorteil, dass die Resonanzschwingung durch eine Berührung zwischen den korrespondierenden Abstützflächen keinen oder nur einen sehr geringen Einfluss auch die Ultraschallschwingung hat. Dabei ist die Anordnung der Rippe an der Sonotrode bevorzugt, da dann durch das Abstützelement die die Ultraschallschwingung am wenigsten beeinflusst wird.

In einer bevorzugten Ausführungsform weisen die Rippe und die Nut einen trapezförmigen Querschnitt auf. Ist beispielsweise die Rippe an der Sonotrode angeordnet, so kann diese als umlaufende Rippe ausgebildet sein, wobei die Dicke der Rippe in radialer Richtung abnimmt. Dabei sind in einer besonders bevorzugten Ausführungsform die Abstützfläche von sowohl Rippe als auch Nut derart ausgebildet, dass sie zwei Abstützflächensegmente aufweisen, die nicht parallel verlaufen und mit der Längsachse einen Winkel einschließen, der <90° ist.

Durch diese Maßnahme ist die axiale Positionierung der Ultraschallschwingeinheit sehr einfach und exakt. Darüber hinaus kann die Beeinflussung der Ultraschallschwingung durch das Abstützelement minimiert werden. In den Schwingungsknoten ist zwar die Amplitude der longitudinalen Ultraschallschwingung minimal, die Dickenschwingung senkrecht zur Längsachse ist jedoch gerade hier am größten. Diese wird durch die gegenüber der Senkrechten auf der Längsachse geneigten Abstützflächen nur wenig behindert. Die Beeinflussung kann noch weiter reduziert werden, wenn das Abstützelement die Sonotrode ausschließlich an korrespondierenden Abstützflächen berührt, die mit der Längsachse einen Winkel einschließen, der <90° ist.

In einer weiteren bevorzugten Ausführungsform ist ein Gegenwerkzeug vorgesehen, wobei Sonotrode und Gegenwerkzeug in einer Richtung senkrecht zur Längsachse relativ zueinander bewegbar sind und das Abstützelement derart positioniert ist, dass eine von dem Gegenwerkzeug eventuell über ein zwischen Sonotrode und Gegenwerkzeug positioniertes Material auf die Sonotrode ausgeübte Kraft auf das Abstützelement übertragen wird. Im Grunde genommen sind somit das Gegenwerkzeug und das Abstützelement auf gegenüberliegenden Seiten der Sonotrode positioniert.

In einer weiteren bevorzugten Ausführungsform ist das Abstützelement derart ausgebildet ist, dass es zwischen zwei Positionen senkrecht zur Längsachse hin und her bewegbar ist, wobei vorzugweise eine Verriegelungsvorrichtung vorgesehen ist, mit welcher das Abstützelement in zumindest einer Position verriegelbar ist.

In einer weiteren bevorzugten Ausführungsform ist eine Halterung zum Halten der Ultraschallschwingeinheit vorgesehen, wobei vorzugsweise das Abstützelement an der Halterung montiert ist.

Dabei kann das Abstützelement relativ zur Halterung zwischen einer Halteposition und einer Freigabeposition hin und her bewegt werden kann. In der Halteposition sind die korrespondierenden Kontaktflächen miteinander in Kontakt, während in der Freigabeposition die Ultraschallschwingeinheit in Richtung der Längsachse bewegt werden kann, ohne dass diese Bewegung von dem Abstützelement behindert wird.

In einer weiteren bevorzugten Ausführungsform weist die Halterung eine Winkelpositionierungsvorrichtung aufweist, wobei die Winkelpositionierungsvorrichtung und die Ultraschallschwingeinheit derart ausgebildet sind, dass sie formschlüssig miteinander verbindbar sind, so dass eine Drehung der Ultraschallschwingeinheit um die Längsachse durch die formschlüssige Verbindung verhindert wird und eine Relativbewegung zwischen der Ultraschallschwingeinheit und der Halterung in Richtung der Längsachse nicht verhindert wird.

Durch diese formschlüssige Verbindung wird die Winkelposition der Ultraschallschwingeinheit in Bezug auf ihre Längsachse festgelegt. Die Ultraschallschwingeinheit muss lediglich mit der Winkelpositionierungsvorrichtung verbunden werden, um die Drehposition festzulegen. Danach kann eine Positionierung der Ultraschallschwingeinheit zumindest in begrenztem Umfang in Richtung der Längsachse vorgenommen werden. Ein weiteres Drehen um die Längsachse wird durch die formschlüssige Verbindung verhindert. Die formschlüssige Verbindung ist dabei derart ausgebildet, dass die Winkelposition in Bezug auf die Längsachse bei in Eingriff treten der formschlüssigen Verbindung in der gewünschten Position ist. Eine weitere Justierung in der Drehrichtung ist nicht notwendig. Die Ultraschallschwingeinheit muss somit nur mit der Winkelpositionierungsvorrichtung verbunden werden, um eine nahezu perfekt parallele Ausrichtung der Siegelflächen von Amboss und Sonotrode zu verwirklichen.

Mithilfe des Abstützelements wird somit die axiale Positionierung der Ultraschallschwingeinheit festgelegt, während mithilfe der Drehpositioniervorrichtung die Winkelposition der Ultraschallschwingeinheit in Bezug auf die Längsachse festgelegt wird.

In einer bevorzugten Ausführungsform weist der Außenwulst der Ultraschallschwingeinheit mindestens eine Ausnehmung auf, wobei die Winkelpositionierungsvorrichtung mindestens einen zu der Ausnehmung korrespondierenden Vorsprung aufweist, der in die Ausnehmung eingreifen kann und somit die formschlüssige Verbindung verwirklicht.

Dabei kann der Außenwulst mehrere Ausnehmungen aufweisen, wobei vorzugsweise die Winkelpositionierungsvorrichtung mehrere zu den mehreren Ausnehmungen korrespondierende Vorsprünge aufweist, wobei besonders bevorzugt die Ultraschallschwingeinheit in mehreren relativ zueinander um die Längsachse gedrehten Positionen mit der Winkelpositionierungsvorrichtung formschlüssig verbunden werden kann.

Insbesondere dann, wenn die Sonotrode als Wendesonotrode mit mehreren Siegelflächen ausgebildet ist, ist letztere Ausführungsform von Vorteil. In jeder Position, in welcher die formschlüssige Verbindung eine Relativdrehung zwischen Winkelpositionierungsvorrichtung und Ultraschallschwingeinheit verhindert, ist die Ultraschallschwingeinheit in einer Drehposition, in welcher eine der mehreren Siegelflächen optimal ausgerichtet ist.

Der Außenwulst kann beliebig ausgebildet sein. Beispielsweise kann der Außenwulst einen T-förmigen Querschnitt aufweisen. Der Außenwulst weist dann einen Steg und einen sich beidseitig im rechten Winkel von einer Seite des Stegs erstreckenden Flansch auf. Die Ausnehmung oder die Ausnehmungen können dann vorzugsweise im Flansch vorgesehen sein.

Der zumindest eine Vorsprung der Winkelpositionierungsvorrichtung kann sich prinzipiell in jeder Richtung erstrecken, soweit er in der Lage ist, eine formschlüssige Verbindung mit der Ultraschallschwingeinheit bereitzustellen. In einer bevorzugten Ausführungsform erstreckt sich der Vorsprung der Winkelpositionierungsvorrichtung in axialer Richtung.

In einer weiteren bevorzugten Ausführungsform weisen die mindestens eine Ausnehmung des Au-βenwulstes sowie der Vorsprung der Winkelpositionierungsvorrichtung zueinander korrespondierende Kontaktflächen auf, die bei in die Winkelpositionierungsvorrichtung eingesetzter Ultraschallschwingeinheit bei einer Drehung der Ultraschallschwingeinheit um die Längsachse miteinander in Kontakt treten, wobei vorzugsweise die Kontaktflächen der Ausnehmung und/oder des Vorsprungs gegenüber der Längsachse geneigt sind. Im Grunde genommen stellt diese Ausführungsform eine Verzahnung zwischen Winkelpositionierungsvorrichtung einerseits und Ultraschallschwingeinheit andererseits dar.

Um die formschlüssige Verbindung möglichst spielfrei zu gestalten ist in einer bevorzugten Ausführungsform vorgesehen, dass die Vorsprünge und oder Ausnehmungen spitz zulaufend ausgebildet sind mit der Folge, dass die Kontaktflächen gegenüber der Längsachse geneigt sind. Beispielsweise können die Vorsprünge und Ausnehmungen als Hirth-Verzahnung ausgeführt sein.

In einer weiteren bevorzugten Ausführungsform weist die Winkelpositionierungsvorrichtung ein Befestigungselement zum Befestigen der Winkelpositionierungsvorrichtung an einem Maschinenständer und ein Kopplungselement auf, welches in Richtung der Längsachse relativ zum Befestigungselement zwischen zwei Positionen hin und her bewegbar ist, wobei die formschlüssige Verbindung zwischen Kopplungselement und Ultraschallschwingeinheit hergestellt werden kann. Dabei kann das Kopplungselement in eine der Positionen elastisch vorgespannt sein.

Durch die Zweiteiligkeit der Winkelpositionierungsvorrichtung kann das Kopplungselement mit der Ultraschallschwingeinheit eine formschlüssige Verbindung eingehen oder außer Eingriff bewegt werden, um ein Drehen der Ultraschallschwingeinheit um ihre Längsachse zu ermöglichen.

In einer weiteren bevorzugten Ausführungsform ist zwischen Befestigungselement und Kopplungselement eine Druckplatte vorgesehen, wobei das Kopplungselement um die Längsachse relativ zur Druckplatte drehbar ist. Des Weiteren ist eine Arretiervorrichtung vorgesehen, mit welcher das Kopplungselement derart arretiert werden kann, dass eine Drehung des Kopplungselementes um die Längsachse der Ultraschallschwingeinheit verhindert wird. In einer bevorzugten Ausführungsform ist die Arretiervorrichtung an der Halterung befestigt.

Es kann eine Feinjustierungsvorrichtung vorgesehen sein, mit welcher das Kopplungselement relativ zum Befestigungselement um die Längsachse zwischen zwei Drehpositionen hin und her gedreht werden kann, wobei besonders bevorzugt die Feinjustiervorrichtung aus einem mit dem Kopplungselement verbindbaren Justierelement mit Langloch sowie einer durch das Langloch greifenden Schraube besteht, welche in eine Gewindebohrung der Halterung greift.

Die Drehbarkeit des Kopplungselementes relativ zum Befestigungselement dient dazu, eventuell noch bestehende Abweichungen von der Parallelität der Siegelfläche der Sonotrode und der Siegelfläche des Amboss auszugleichen. Dies kann mit Hilfe der Feinjustiervorrichtung extrem genau erfolgen.

In einer weiteren bevorzugten Ausführungsform ist der Außenwulst an der Sonotrode oder an einem zwischen Sonotrode und Konverter angeordneten Amplitudentransformator angeordnet, wobei vorzugsweise der Wulst in einem Schwingungsknoten der Resonanzschwingung mit der Wellenlänge λ/2 angeordnet ist. Die Anordnung im Schwingungsknoten stellt sicher, dass die Beeinflussung der Resonanzschwingung durch die Halterung bzw. die Winkelpositionierungsvorrichtung minimal ist. Ist der Außenwulst mit T-förmigem Querschnitt mit einem Steg und einem sich beidseitig im rechten Winkel von einer Seite des Stegs erstreckenden Flansch ausgebildet, so sollte dann der Steg im Schwingungsknoten der Resonanzschwingung angeordnet sein.

Die Halterung mit der Klemmvorrichtung kann zwischen einer geöffneten Position und einer geschlossenen Position hin und her bewegtwerden.

Dabei kann die Ultraschallschwingeinheit in der geöffneten Position aus der Halterung entnommen werden. In der geschlossenen Position tritt die Klemmvorrichtung an zumindest zwei Haltepunkten mit der Ultraschallschwingeinheit in Kontakt und übt eine Kraft auf diese aus, sodass die Ultraschallschwingeinheit gehalten wird.

Dabei sind die Haltepunkte vorzugsweise auf dem Außenwulst angeordnet.

Die Klemmvorrichtung ist als Spannhülse mit

Schlitz ausgebildet. Dabei hat die Spannhülse eine Innenfläche, die korrespondierend zu der Außenfläche eines Abschnittes der Ultraschallschwingeinheit ausgebildet ist. Der Schlitz verbindet die Außenfläche der Hülse mit der Innenfläche der Hülse, so dass die Hülse zwei gegenüberliegende Schlitzwände aufweist, die den Schlitz begrenzen. Eine Spannvorrichtung ist vorgesehen, mit welcher die Schlitzwände aufeinander zu bewegt werden können, wodurch der von der Innenfläche umgrenzte Raum reduziert und die Ultraschallschwingeinheit innerhalb der Hülse geklemmt wird.

Beispielsweise kann in eine Schlitzwand eine Gewindebohrung und in die andere Schlitzwand eine Durchgangsstufenbohrung eingebracht werden, so dass eine als Spannvorrichtung dienende Schraube durch die Durchgangsstufenbohrung in die Gewindebohrung eingreifen kann und beim Drehen der Schraube die beiden Schlitzwände aufeinander zubewegt werden können.

Um eine Beschädigung der Ultraschallschwingeinheit durch die Klemmvorrichtung zu verhindern ist in einer bevorzugten Ausführungsform vorgesehen, dass die Schlitzwände als Anschlagsflächen dienen. Daher sind ein Abschnitt der Außenfläche der Ultraschallschwingeinheit und die Innenfläche der Spannhülse derart aufeinander abgestimmt, dass dann, wenn die Schlitzwände sich berühren, die Ultraschallschwingeinheit sicher von der Klemmvorrichtung gehalten, ohne dass es zu einer Beschädigung der Ultraschallschwingeinheit kommt.

Weitere Vorteile, Merkmale und Anwendungsmöglichkeiten werden deutlich anhand der folgenden Beschreibung einer bevorzugten Ausführungsform der Erfindung und der zugehörigen Figuren. Es zeigen:
Figur 1 eine Draufsicht auf eine erfindungsgemäße Ultraschallschweißanlage,
Figur 2 eine perspektivische Ansicht auf die Ultraschallschweißanlage gemäß Figur 1 ohne Halter,
Figur 3 eine perspektivische Ansicht auf den Halter von Figur 1 ohne Schwinggebilde,
Figuren 4a, 4b, 4c, 4d eine perspektivische Ansicht des Kopplungselementes, des Winkelpositionierelementes von Figur 1 sowie eine Schnittansicht des Winkelpositionierungselementes und der Halterung,
Figur 5 eine Schnittansicht durch die Ausführungsform von Figur 1,
Figur 6 eine perspektivische Ansicht auf den Amplitudentransformator von Figur 1 und
Figur 7 eine perspektivische Ansicht auf die Sonotrode von Figur 1.

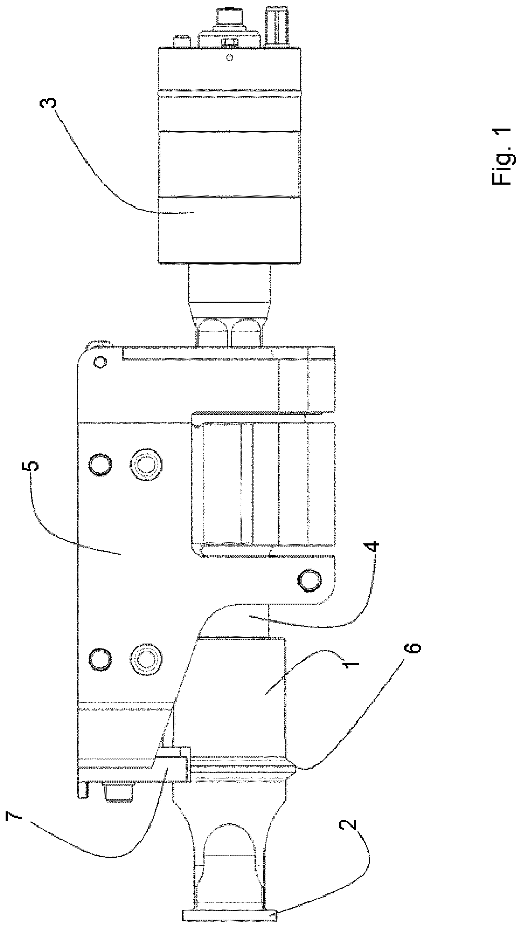

In Figur 1 ist eine erste Ausführungsform der erfindungsgemäßen Ultraschallschweißanlage gezeigt. Diese Ultraschallschweißanlage ist speziell für das Schweißen von Metall vorgesehen. Sie weist eine Ultraschallschwingeinheit auf, die eine Sonotrode 1, ein Amplitudentransformator 4 und einen Konverter 3 beinhaltet. Die Elemente der Ultraschallschwingeinheit sind entlang einer Längsachse nebeneinander angeordnet. Mit Hilfe des Konverters 3 wird eine elektrische Wechselspannung in eine mechanische Ultraschallschwingung umgewandelt. Diese mechanische Schwingung wird mit Hilfe des Amplitudentransformators 4 in ihrer Amplitude, nicht jedoch in ihrer Frequenz, verändert und auf die Sonotrode 1 übertragen. Auf der dem Konverter 3 gegenüberliegenden Seite der Sonotrode 1 weist diese insgesamt vier Siegelflächen 2 auf, die dafür vorgesehen sind, mit dem zu bearbeitenden Material in Kontakt zu treten. Die Ultraschallschwingeinheit ist mit ihren Einzelelementen, d.h. dem Konverter 3, dem Amplitudentransformator 4 und der Sonotrode 1 derart aufeinander abgestimmt, dass sie mit einer Ultraschallfrequenz der Wellenlänge in Resonanz versetzt werden kann. Innerhalb der Sonotrode bildet sich dann eine stehende Longitudinalhalbwelle aus. Die Ultraschallschwingeinheit muss in einem Maschinenständer gehalten werden. Dafür ist der Halter 5 vorgesehen, der weiter unten im Detail erläutert wird.

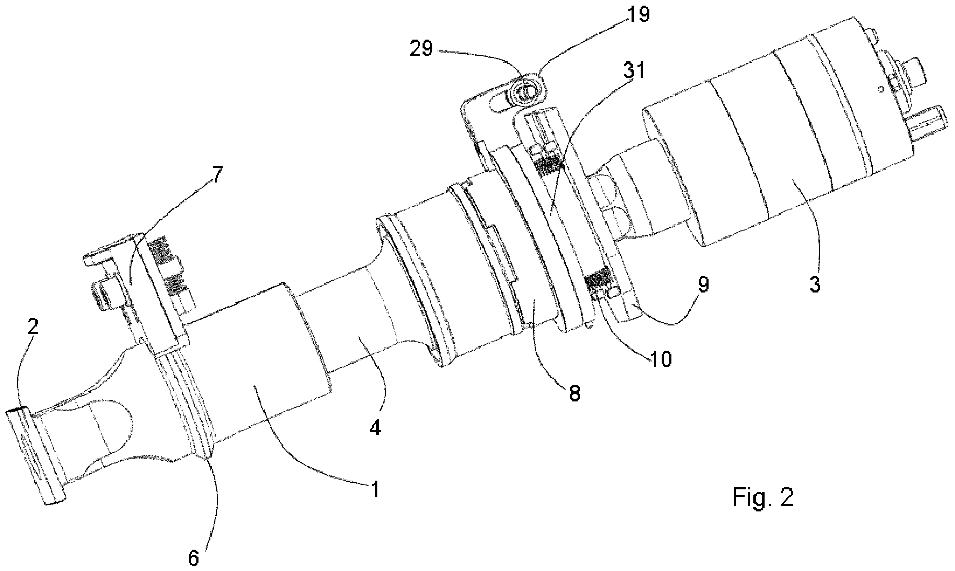

Figur 2 zeigt eine perspektivische Ansicht der Ausführungsform von Figur 1. Man erkennt hier, dass die Einzelteile der Ultraschallschwingeinheit, nämlich der Konverter 3, der Amplitudentransformator 4 und die Sonotrode 1 im Wesentlichen rotationssymmetrisch sind, wobei lediglich das dem Konverter 3 abgewandte Ende der Sonotrode 1 quadratisch ausgebildet ist und an jeder Kantenfläche des quadratischen Querschnittes eine Schweißfläche 2 vorgesehen ist. Alternativ könnte die Sonotrode auch andere Querschnitte, wie z.B. dreieckig, rechteckig aber nicht quadratisch, usw. aufweisen.

Insbesondere beim Schweißen von Metallen und zwar insbesondere von Nichteisenmetallen, wie z.B. Kupfer oder Aluminium, mittels Ultraschall kommt es zu einer erheblichen Abnutzung der Schweißfläche, sodass die Ultraschallschweißanlage teilweise oder vollständig in regelmäßigen Abständen ausgetauscht werden muss.

Da die gezeigte Sonotrode 1 insgesamt vier Siegelflächen 2 aufweist, kann sie, wenn eine Siegelfläche 2 verschlissen ist, um 90° gedreht und in dieser Position weiter verwendet werden.

Zum Bearbeiten von Metall mittels Ultraschall wird das zu bearbeitende Material zwischen der Siegelfläche 2 der Sonotrode 1 und einem Gegenwerkzeug (nicht gezeigt) angeordnet und dann die Ultraschallschwingeinheit in Schwingung versetzt, sodass über die Siegelflächen 2 eine Ultraschallschwingung in das zu bearbeitende Material übertragen werden kann.

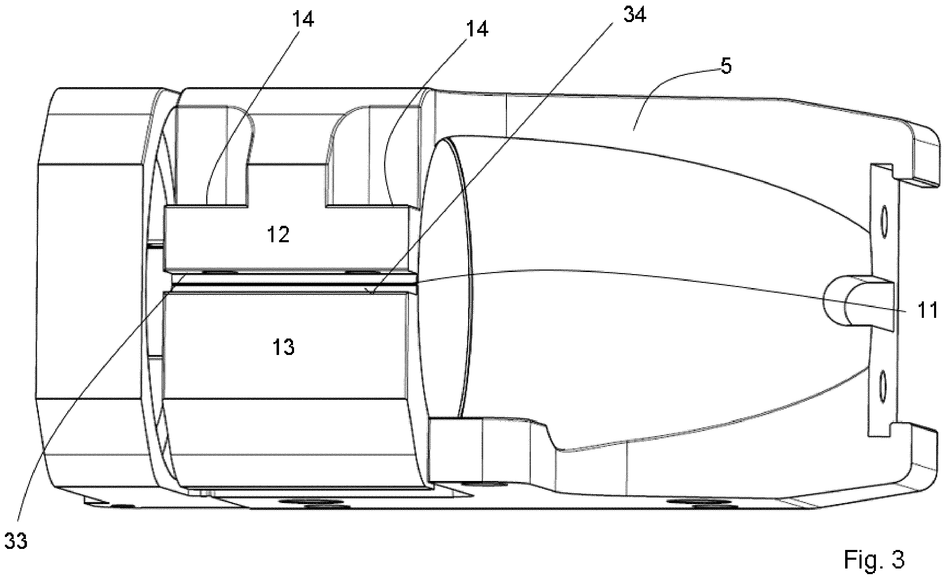

Die Halterung 5 von Figur 1 ist in Figur 3 separat dargestellt. Sie ist als Spannhülse ausgebildet. Es ist zu erkennen, dass die Halterung den Amplitudentransformator vollständig umschließt. Sie weist allerdings einen Schlitz 11 auf, der durch zwei Schenkelelemente 12, 13 der Halterung gebildet wird. In der in Figur 3 gezeigten Position kann den Amplitudentransformator 4 axial in die Halterung 5 geschoben werden. In dieser Position kann der Amplitudentransformator 4 und damit die gesamte Ultraschallschwingeinheit innerhalb der Halterung 5 um seine Längsachse gedreht werden. Sobald die gewünschte Position der Ultraschallschwingeinheit bzw. der Siegelflächen 2 der Sonotrode 1 erreicht ist, können die beiden Schenkelelemente 12, 13 mit Hilfe von Schrauben, die in den Bohrungen 14, die innerhalb des Schenkelelementes 13 als Gewindebohrung und innerhalb des Schenkelelementes 12 als Durchgangsbohrung ausgebildet sind, aufgenommen sind, aufeinander zubewegt werden, sodass der Innendurchmesser der hülsenartigen Halterung 5 verringert wird und der Amplitudentransformator 4 in der Halterung 5 festgeklemmt wird und dann keine Relativdrehung der Ultraschallschwingeinheit um ihre Längsachse gegenüber der Halterung 5 mehr möglich ist. Dabei ist zu beachten, dass in dem geöffneten Zustand der Halterung die Bohrung nur minimal größer sein sollte als der Außendurchmesser des zu spannenden Amplitudentransformators. Dieses Übermaß sollte kleiner als 0,1mm vorzugsweise kleiner als 0,05 mm und am besten kleiner als 0,02mm sein. Bei der gezeigten Ausführungsform weisen die Schenkelelemente 12,13 korrespondierende Schlitzwände, die als Anschlagsflächen dienen, auf. Dies bedeutet, dass der Abschnitt der Außenfläche der Ultraschallschwingeinheit und die Innenfläche der Spannhülse derart ausgebildet sind, dass mithilfe von Schrauben, die in die Bohrungen 14 eingreifen, die Schenkelelemente 12,13 soweit aufeinander zu bewegt werden können bis die Anschlagsflächen sich berühren und in dieser Situation die Ultraschallschwingeinheit fest innerhalb der Spannhülse gehalten wird. Durch diese Konfiguration wird sichergestellt, dass die Spannhülse nicht einen zu großen Druck auf die empfindliche Ultraschallschwingeinheit ausüben kann. Es kann daher keine größere Kraft auf die Ultraschallschwingeinheit ausgeübt werden als diejenige, die die Hülse in dem Moment auf die Ultraschallschwingeinheit aufbringt, in dem die beiden Schlitzwände der Schenkelelemente 12,13 aufeinandertreffen.

Bevorzugt ist die Spannhülse derart ausgebildet, dass bei in der Spannhülse aufgenommener Ultraschallschwingeinheit ein Drehmoment von mindestens 100 Nm, vorzugsweise von mindestens 200 Nm und am besten von mindestens 300 Nm auf die Ultraschallschwingeinheit aufgebracht werden kann, ohne dass die Ultraschallschwingeinheit innerhalb der Spannhülse sich relativ zu Spannhülse um die Längsachse dreht. Dadurch ist sichergestellt, dass einzelne Bauteile, wie z.B. die Sonotrode von der Ultraschallschwingeinheit abmontiert werden können, während diese in der Halterung gehalten wird.

Andererseits sollte die Klemmkraft, die die Halterung auf den Amplitudentransformator ausübt, so klein wie möglich sein, um die Auswirkungen der Klemmung auf den Amplitudentransformator möglichst gering zu halten. Daher sollte die Spannhülse derart ausgebildet sein, dass, wenn ein Drehmoment von mehr als 2000 Nm, vorzugsweise von mehr als 1000Nm und am besten von mehr als 500 Nm auf die Ultraschallschwingeinheit aufgebracht wird, sich die Ultraschallschwingung innerhalb der Halterung relativ zu dieser um die Längsachse dreht. Dadurch ist sichergestellt, dass die von der Halterung auf den Amplitudentransformator aufgebrachte Kraft die Schwingung kaum beeinflusst.

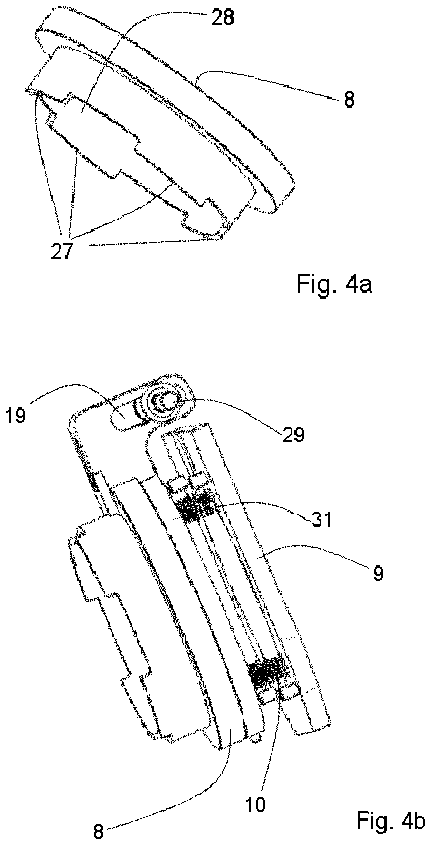

In Figur 4a ist eine perspektivische Ansicht des Kopplungselementes 8 der Winkelpositionierungseinrichtung gezeigt. Die Winkelpositionierungseinrichtung dient dazu, die Winkelposition der Siegelflächen 2 der Sonotrode 1 auf einfache Weise möglichst genau einzustellen.

Die Winkelpositionierungsvorrichtung weist das Kopplungselement 8 auf, das als Hülse ausgebildet ist. An seiner dem Konverter abgewandten Seite sind eine Reihe von Vorsprüngen 27 bzw. Ausnehmungen 28 angeordnet. Dabei ist der Außendurchmesser des Konvertergehäuses kleiner als der Innendurchmesser des Kopplungselements ausgebildet, so dass die Ultraschallschwingeinheit einschließlich Konverter durch das Kopplungselement geschoben werden kann bis die Ausnehmungen und Vorsprünge ineinandergreifen.

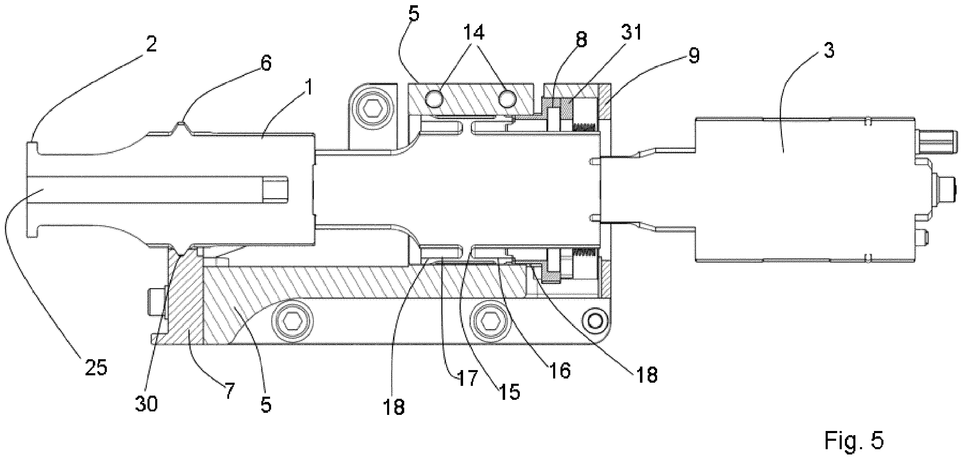

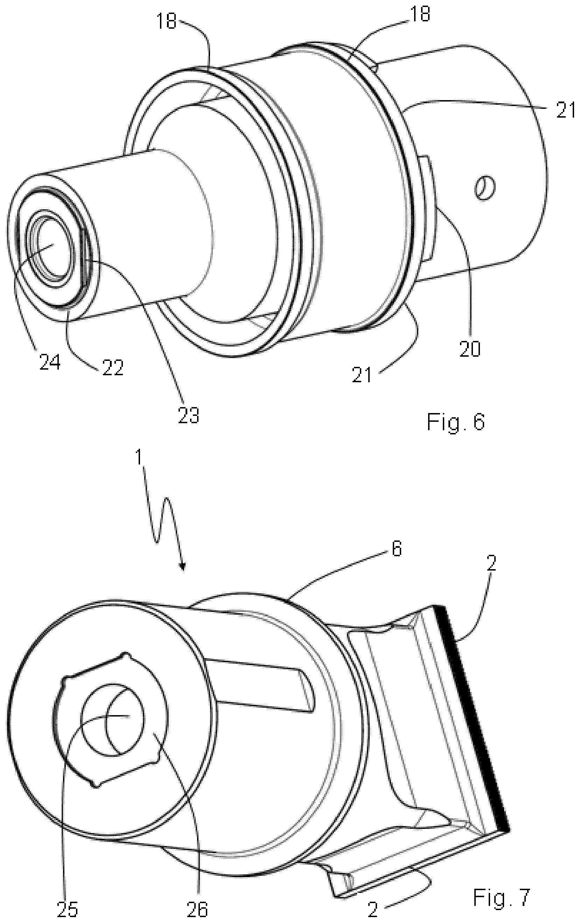

Wie man insbesondere in Figur 5 erkennen kann, weist der Amplitudentransformator einen Außenwulst auf, der hier durch einen Steg 15 und einen Flansch mit einem ersten und einem zweiten Hülsenabschnitt 16, 17 gebildet wird. Der Steg 15 ist an einem Schwingungsknoten mit dem Amplitudentransformator 4 verbunden. Von dem Amplitudentransformator 4 erstreckt sich am Ende des Steges 15 der erste Hülsenabschnitt 16 in Richtung des Konverters 3 und der zweite Hülsenabschnitt 17 in Richtung der Sonotrode 1. Sowohl der erste Hülsenabschnitt 16 als auch der zweite Hülsenabschnitt 17 haben einen umlaufenden Bund 18, die als Kontaktflächen für die Halterung 5 dienen. Diese Art der Befestigung erlaubt eine Halterung ohne dass es zu einer nennenswerten Beeinflussung des Schwingungsverhaltens der Ultraschallschwingeinheit kommt. In Figur 6 ist eine perspektivische Darstellung des Amplitudentransformators 4 dargestellt. Man erkennt die beiden umlaufenden Bunde 18. Der erste Hülsenabschnitt 16 weist eine Reihe von Vorsprüngen 20 bzw. Ausnehmungen 21 auf, die korrespondierend zu den Vorsprüngen 27 und den Ausnehmungen 28 der Winkelpositionierungsvorrichtung ausgebildet sind. Die Vorsprünge 27 und die Ausnehmungen 28 der Winkelpositionierungsvorrichtung können somit mit den Ausnehmungen 21 und den Vorsprüngen 20 verbunden werden. Durch diese formschlüssige Verbindung wird eine Drehung der Ultraschallschwingeinheit um die Längsachse verhindert, während einer Relativbewegung zwischen der Ultraschallschwingeinheit und der Winkelpositioniervorrichtung in Richtung der Längsachse nicht verhindert wird. Dabei ist der Außendurchmesser des umlaufenden Bundes etwas kleiner als der Innendurchmesser der Halterung.

In Figur 4b ist die gesamte Drehpositionierungsvorrichtung dargestellt. Das bereits in Figur 4a gezeigte Kopplungselement 8 liegt an einer Druckplatte 31 an, welche wiederum mittels der Federn 10 federnd an dem Befestigungselement 9 angeordnet ist. Das Befestigungselement 9 ist stationär angeordnet. Aufgrund der Federn 10 kann die Druckplatte 31 in axialer Richtung relativ zum Befestigungselement 9 bewegt werden. Da das Kopplungselement 8 an der Druckplatte 31 anliegt, bewegt sich das Kopplungselement in axialer Richtung zusammen mit der Druckplatte 31. Das Kopplungselement 8 kann relativ zur Druckplatte 31 um die Längsachse zwischen zwei Positionen hin und her gedreht werden, wie weiter unten beschrieben wird.

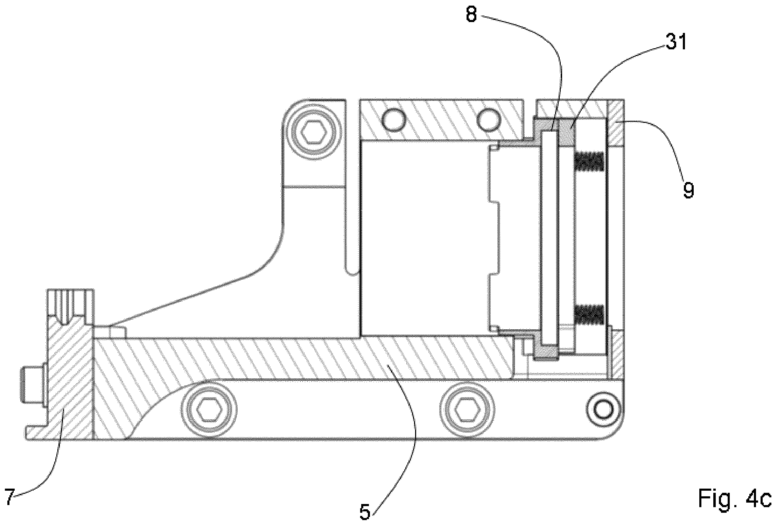

Figur 4c ist eine Schnittansicht des Halters 5 zusammen mit der Drehpositionierungsvorrichtung gezeigt.

Wie auch in Figur 2 gezeigt ist, drücken Federelemente 10 das Kopplungselement 8 nach vorne, d.h. in Richtung der Sonotrode 1, und damit in Eingriff mit den Vorsprüngen 20 und Ausnehmungen 21 des Amplitudentransformators 4.

So lange die Halterung 5 noch nicht in ihrer geklemmten Position ist, kann die Ultraschallschwingeinheit um ihre Längsachse gedreht werden, in dem das Kopplungselement 8 mithilfe der Ultraschallschwingeinheit entgegen der Kraft der Federn 10 nach hinten, d.h. in Richtung des Konverters 3 gedrückt wird. Die Ultraschallschwingeinheit wird dann so lange um ihre Längsachse gedreht bis die Vorsprünge 20 in den Ausnehmungen 28 zu liegen kommen. Das Kopplungselement 8 rastet somit in den Flansch des Amplitudentransformators 4 ein.

In der gezeigten Ausführungsform entspricht die Zahl der Vorsprünge 20 bzw. 27 und die Zahl der Ausnehmungen 21 bzw. 28 der Anzahl von Siegelflächen 2 an der Sonotrode 1. Es ist daher sichergestellt, dass die Ultraschallschwingeinheit nur in ausgewählten Winkelpositionen montiert werden kann.

Bei der gezeigten Ausführungsform ist zusätzlich eine kleine Relativdrehung des Kopplungselementes 8 gegenüber dem Befestigungselement 9 um die Längsachse möglich. Um eine solche geringfügige Drehung zu bewerkstelligen ist ein als Öse 19 ausgebildetes Justierelement vorgesehen, das lösbar mit dem Kopplungselement 8 verbunden ist. Eine als Schraube ausgebildete Feinjustiervorrichtung 29 verbindet die das Justierelement mit der Halterung 5. Durch Drehen der Schraube 29 kann somit in einem gewissen Umfang das mit dem Justierelement verbundene Kopplungselement 8 gegenüber der Halterung 5 und dem Befestigungselement 9 verdreht werden, um eine Feinjustierung der Winkelposition vorzunehmen. Daher hat die Schraube 29 innerhalb des in der Öse 19 vorgesehenen Langlochs sowohl in axialer Richtung als auch in radialer Richtung etwas Spiel.

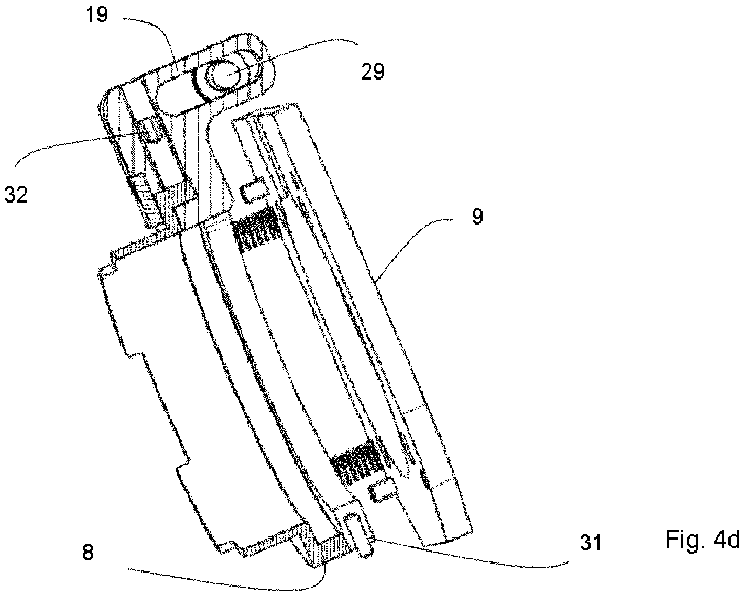

In Figur 4d ist eine weitere perspektivische Schnittansicht durch die Winkelpositionierungsvorrichtung gezeigt. In der Öse 19 ist eine Gewindebohrung eingebracht, in welche eine Madenschraube 32 eingreift. Mithilfe der Madenschraube 32 kann die Öse 19 mit dem Kopplungselement 8 verklemmt werden, sodass Kopplungselement 8 und Öse 19 nur gemeinsam um die Längsachse gedreht werden können.

Bei der erstmaligen Justierung einer Ultraschallschwingeinheit innerhalb der Halterung oder wenn die Winkelposition der Siegelflächen zwei gegenüber den Vorsprüngen 20 und Ausnehmungen 21 nicht bekannt ist, kann somit die Madenschraube 32 gelöst werden, die Ultraschallschwingeinheit in die Halterung eingesetzt werden, sodass das Kopplungselement 8 entgegen der Kraft der Federn 10 in Richtung des Befestigungselementes 9 gedrückt wird, dann um ihre Längsachse gedreht werden, bis die Vorsprünge 20 und Ausnehmungen 21 der Ultraschallschwingeinheit in den korrespondierenden Vorsprüngen 27 und Ausnehmungen 28 des Kopplungselement des 8 zu liegen kommen. In dieser Position wird das Kopplungselement 8 aufgrund der Kraft der Federn 10 wieder von dem Befestigungselement 9 weggedrückt. Nun kann die Ultraschallschwingeinheit um ihre Längsachse gedreht werden, bis die Siegelflächen 2 in etwa in der gewünschten Drehposition sind. Da die Madenschraube 32 gelöst ist, dreht sich das Kopplungselement 8 mit der Ultraschallschwingeinheit mit, während die Druckplatte 31 an Ihrer Position verbleibt.

Sobald die gewünschte Drehposition der Ultraschallschwingeinheit in etwa erreicht ist, kann die Madenschraube 32 festgedreht werden, um die Öse 19 mit dem Kopplungselement 8 zu verbinden. Eine weitere Drehung der Ultraschallschwingeinheit um ihre Längsachse ist nun nur noch sehr begrenzt durch Drehen der Schraube 29 möglich.

Wie in Figur 6 zu sehen ist weist der Amplitudentransformator 4 an seiner der Sonotrode 1 zugewandten Seite einen Zapfen 22 auf. In der Figur 7 ist eine perspektivische Ansicht der Sonotrode 1 gezeigt. Die Sonotrode 1 weist an ihrer dem Amplitudentransformator 4 zugewandten Seite eine zu dem Zapfen 22 korrespondierende Aussparung 26 auf. Der Zapfen 22 weist Ausschnitte 23 auf, die in der korrespondierenden Aussparung 26 ebenfalls zu erkennen sind. Wird der Zapfen 22 in die Aussparung 26 eingesetzt, so entsteht eine formschlüssige Verbindung zwischen Sonotrode 1 und Amplitudentransformator 4 in einer Drehrichtung um die Längsachse.

Die Sonotrode 1 weist eine als Stufenbohrung ausgebildete Zentralbohrung 25 auf, durch die eine Schraube in eine korrespondierende Zentralgewindebohrung 24 des Amplitudentransformators geführt werden kann, um die Sonotrode 1 an dem Amplitudentransformator 4 zu befestigen.

Wie in der Schnittansicht von Figur 5 zu erkennen ist, weist die Sonotrode 1 eine Außenrippe 6 auf, die in einem Schwingungsknoten der Resonanzfrequenz der Sonotrode 1 angeordnet ist. Die Außenrippe ist in der gezeigten Ausführungsform umlaufend ausgebildet. An der Halterung 5 ist ein Abstützelement befestigt, welches in radialer Richtung zwischen einer äußeren Position, in welcher die Ultraschallschwingeinheit in der Halterung aufgenommen werden kann, und einer inneren Position, in welcher das Abstützelement eine Bewegung der Ultraschallschwingeinheit in Richtung der Längsachse verhindert. In dieser Position kann das Abstützelement arretiert werden, um eine unerwünschte Bewegung des Abstützelementes 7 in Richtung der äußeren Position zu verhindern. Das Abstützelement 7 weist eine Nut 30 auf, in welcher die Außenrippe 6 zu liegen kommt. Wird nun wie in Figur 5 von oben durch das zu bearbeitende Material auf die Sonotrode eine Kraft ausgeübt, so wird diese Kraft von dem Abstützelement 7 aufgenommen. Die vorgesehene umschließende Halterung 5 an dem Amplitudentransformator 4 ist von dem Bearbeitungsort, d.h. den Siegelflächen 4 relativ weit entfernt, sodass bereits kleine Schweißkräfte auf die Siegelfläche 2 zu einem Verbiegen der Ultraschallschwingeinrichtung führen würden. Daher ist die Abstützvorrichtung 7 vorgesehen.

Um die Ultraschallschwingeinheit in der Halterung aufzunehmen, muss zunächst die Klemmung mittels der Schrauben in den Bohrungen 14 gelöst werden. Zudem muss das Abstützelement 7 radial nach außen verschoben werden. Nun kann die Ultraschallschwingeinheit in die Halterung 5 eingesetzt werden. Dabei wird das Kopplungselement 8 sowie die Druckplatte 31 gegen die Federkraft der Federn 10 in Richtung des Befestigungselements 9 gedrückt bis die Außenrippe 6 in der Nut 30 des Abstützelementes 7, nachdem dieses radial nach innen bewegt und arretiert worden ist, zu liegen kommt. Damit ist die axiale Position der Ultraschallschwingeinheit festgelegt. Die Winkelpositionierung erfolgt dann dadurch, dass die Ultraschallschwingeinrichtung so lange um ihre Längsachse gedreht wird bis die Vorsprünge vom Kopplungselement 8 in die entsprechenden Ausnehmungen am ersten Hülsenabschnitt 16 einrasten. In dieser Position ist dann auch die Winkelposition nahezu perfekt ausgerichtet. Die Feinabstimmung erfolgt mit Hilfe der Feinjustiervorrichtung, d.h. der Öse 19 und der Schrauben 29, mit deren Hilfe eine Feinjustierung der Winkelposition erfolgen kann.

Sobald die korrekte Position der Ultraschallschwingeinheit erreicht ist, können mit Hilfe der Befestigungsschrauben, die in die Bohrungen 14 eingreifen, die Schenkelelemente 12 und 13 aufeinander zubewegt werden, um den Schlitz 11 zu verkleinern und die Ultraschallschwingeinheit in der Haltehülse umschließend zu klemmen.

### Bezugszeichen

- 1: Sonotrode
- 2: Siegelfläche
- 3: Konverter
- 4: Amplitudentransformator
- 5: Halterung
- 6: Außenrippe
- 7: Abstützelement
- 8: Kopplungselement
- 9: Befestigungselement
- 10: Federn
- 11: Schlitz
- 12: Schenkelelement
- 13: Schenkelelement
- 14: Bohrung
- 15: Steg
- 16: erster Hülsenabschnitt
- 17: zweiter Hülsenabschnitt
- 18: Bund
- 19: Öse
- 20: Vorsprung
- 21: Ausnehmung
- 22: Zapfen
- 23: Ausschnitt
- 24: Zentralbohrung
- 25: Zentralbohrung
- 26: Aussparung
- 27: Vorsprung
- 28: Ausnehmung
- 29: Schraube
- 30: Nut
- 31: Druckplatte
- 32: Madenschraube
- 33: Schlitzwand
- 34: Schlitzwand

## Patentansprüche

1. Ultraschallschweißanlage mit einer Ultraschallschwingeinheit, die eine Sonotrode (1) und einen Konverter (3) aufweist, wobei die Sonotrode (1) und der Konverter (3) entlang einer Längsachse nebeneinander angeordnet sind und derart aufeinander abgestimmt sind, dass die Ultraschallschwingeinheit mit einer Ultraschallschwingung in Richtung der Längsachse mit einer Wellenlänge λ in Resonanz gebracht wird, wobei ein zwischen Sonotrode und Konverter angeordneter Amplitudentransformator (4) vorgesehen sein kann, wobei eine Halterung (5) zum Halten der Ultraschallschwingeinheit vorgesehen ist, **wobei** die Halterung (5) eine Klemmvorrichtung aufweist, welche zwischen einer geöffneten Position, in welcher die Ultraschallschwingeinheit aus der Halterung (5) entnommen werden kann, und einer geschlossenen Position, in welcher die Klemmvorrichtung mit der Ultraschallschwingeinheit in Kontakt tritt und eine Kraft auf diese ausübt, so dass die Ultraschallschwingeinheit gehalten wird, hin und her bewegbar ist, **dadurch gekennzeichnet, dass** die Klemmvorrichtung als Hülse mit einer Innen- und einer Außenfläche ausgebildet worden ist, wobei die Innenfläche korrespondierend zu einer Außenfläche eines Abschnittes der Ultraschallschwingeinheit ausgebildet ist, wobei die Hülse einen Schlitz aufweist, der die Außenfläche der Hülse mit der Innenfläche der Hülse verbindet, so dass die Hülse zwei gegenüberliegende Schlitzwände (33, 34) aufweist, die den Schlitz begrenzen, wobei eine Spannvorrichtung vorgesehen ist, mit welcher die Schlitzwände (33, 34) aufeinander zu bewegt werden können, wodurch die Klemmvorrichtung in die geschlossene Position gebracht wird und der von der Innenfläche umgrenzte Raum reduziert und die Ultraschallschwingeinheit innerhalb der Hülse geklemmt wird.

2. Ultraschallschweißanlage nach Anspruch 1, **dadurch gekennzeichnet, dass** die Klemmvorrichtung in der geschlossenen Position an zumindest zwei voneinander beabstandeten Haltepunkten mit der Ultraschallschwingeinheit in Kontakt tritt.

3. Ultraschallschweißanlage nach Anspruch 1 oder 2, **dadurch gekennzeichnet, dass** die Spannvorrichtung eine Schraube ist, welche durch eine in einer Schlitzwand eingebrachte Durchgangsstufenbohrung in eine in einer anderen Schlitzwand eingebrachte Gewindebohrung greift.

4. Ultraschallschweißanlage nach einem der Ansprüche 1 bis 3, **dadurch gekennzeichnet, dass** ein Abschnitt der Außenfläche der Ultraschallschwingeinheit und die Innenfläche der Hülse derart aufeinander abgestimmt, dass dann, wenn die Schlitzwände (33, 34) sich berühren, die Ultraschallschwingeinheit sicher von der Klemmvorrichtung gehalten, ohne dass es zu einer plastischen Verformung der Ultraschallschwingeinheit kommt.

5. Ultraschallschweißanlage nach einem der Ansprüche 1 bis 4, **dadurch gekennzeichnet, dass** die Ultraschallschwingeinheit einen Außenwulst (6) aufweist, mit dem die Halteeinrichtung (5) in der geschlossenen Position in Kontakt tritt.

6. Ultraschallschweißanlage nach Anspruch 5, **dadurch gekennzeichnet, dass** der Au-βenwulst (6) einen T-förmigen Querschnitt aufweist mit einem Steg und einem sich beidseitig im rechten Winkel von einem Ende des Stegs erstreckenden Flansch, wobei vorzugsweise der Flansch mindestens einen umlaufenden Bund aufweist, mit welchen die Klemmeinrichtung in der geschlossenen Position in Kontakt tritt.

7. Ultraschallschweißanlage nach einem der Ansprüche 1-6, **dadurch gekennzeichnet, dass** die Sonotrode (1) mit dem Konverter (3) und/oder der Amplitudentransformator (4) mit dem Konverter (3) und/oder der Amplitudentransformator (4) mit der Sonotrode (1) über eine formschlüssige Verbindung, die einen Formschluss in allen Richtungen der zur Längsachse senkrechten Ebene bereitstellt, verbunden ist.

8. Ultraschallschweißanlage nach Anspruch 7, **dadurch gekennzeichnet, dass** die formschlüssige Verbindung aus einem Zapfen (22) und einer korrespondierenden Aussparung (26) besteht, wobei vorzugsweise der Zapfen (22) an dem Amplitudentransformator (4) und die korrespondierende Aussparung (26) an der Sonotrode (1) oder dem Konverter (3) angeordnet ist, wobei vorzugsweise der Zapfen (22) und die korrespondierende Aussparung (26) drehsymmetrisch um die Längsachse mit einer n-zähligen Drehachse ausgebildet sind, wobei n eine natürliche Zahl größer eins ist, wobei besonders bevorzugt die Sonotrode (1) drehsymmetrisch um die Längsachse mit einer m-zähligen Drehachse ausgebildet ist und m gleich n ist.

9. Ultraschallschweißanlage nach einem der Ansprüche 1 bis 8, **dadurch gekennzeichnet, dass** ein Abstützelement (7) zum Abstützen einer senkrecht zur Längsachse auf die Sonotrode (1) aufgebrachten Kraft vorgesehen ist, wobei Sonotrode (1) und Abstützelement (7) zueinander korrespondierende Abstützflächen aufweisen, die zumindest dann, wenn eine Kraft senkrecht zur Längsachse auf die Sonotrode ausgeübt wird, miteinander in Kontakt treten, wobei die Abstützflächen derart ausgebildet sind, dass sie, wenn sie miteinander in Kontakt stehen eine Relativbewegung der Sonotrode (1) gegenüber dem Abstützelement (7) in Richtung der Längsachse verhindern und eine Drehung der Sonotrode (1) um die Längsachse nicht behindern, wobei vorzugsweise das Abstützelement (7) derart ausgebildet ist, dass es zwischen zwei Positionen senkrecht zur Längsachse hin und her bewegbar ist, wobei besonders bevorzugt eine Verriegelungsvorrichtung vorgesehen ist, mit welcher das Abstützelement (7) in zumindest einer Position verriegelbar ist.

10. Ultraschallschweißanlage nach Anspruch 9, **dadurch gekennzeichnet, dass** das Abstützelement (7) an der Halterung (5) montiert ist.

11. Ultraschallschweißanlage nach einem der Ansprüche 1 bis 10 soweit abhängig von Anspruch 5, **dadurch gekennzeichnet, dass** die Halterung (5) eine Winkelpositionierungsvorrichtung aufweist, wobei der Außenwulst (6) mindestens eine Ausnehmung (21) aufweist, wobei die Winkelpositionierungsvorrichtung mindestens einen zu der Ausnehmung (21) korrespondierenden Vorsprung (20) aufweist, der in die Ausnehmung (21) eingreifen kann und somit eine formschlüssige Verbindung verwirklicht, , so dass eine Drehung der Ultraschallschwingeinheit um die Längsachse durch die formschlüssige Verbindung verhindert wird und eine Relativbewegung zwischen der Ultraschallschwingeinheit und der Halterung (5) in Richtung der Längsachse nicht verhindert wird.

12. Ultraschallschweißanlage nach Anspruch 11, **dadurch gekennzeichnet, dass** der Außenwulst (6) mehrere Ausnehmungen (21) aufweist, wobei vorzugsweise die Winkelpositionierungsvorrichtung mehrere zu den mehreren Ausnehmungen (21) korrespondierende Vorsprünge (20) aufweist, wobei besonders bevorzugt die Ultraschallschwingeinheit in mehreren relativ zueinander um die Längsachse gedrehten Positionen mit der Winkelpositionierungsvorrichtung formschlüssig verbunden werden kann.

13. Ultraschallschweißanlage nach einem der Ansprüche 11-12, **dadurch gekennzeichnet, dass** die mindestens eine Ausnehmung (21) des Außenwulstes (6) sowie der Vorsprung (20) der Winkelpositionierungsvorrichtung zueinander korrespondierende Kontaktflächen aufweisen, die bei in die Winkelpositionierungsvorrichtung eingesetzter Ultraschallschwingeinheit bei einer Drehung der Ultraschallschwingeinheit um die Längsachse miteinander in Kontakt treten, wobei vorzugsweise die Kontaktflächen der Ausnehmung (21) und/oder des Vorsprungs (20) gegenüber der Längsachse geneigt sind.

14. Ultraschallschweißanlage nach einem der Ansprüche 10 bis 13, **dadurch gekennzeichnet, dass** die Winkelpositionierungsvorrichtung ein Befestigungselement (9) zum Befestigen der Winkelpositionierungsvorrichtung an einem Maschinenständer und ein Kopplungselement (8) aufweist, welches in Richtung der Längsachse relativ zum Befestigungselement (8) zwischen zwei Positionen hin und her bewegbar ist, wobei die formschlüssige Verbindung zwischen Kopplungselement (8) und Ultraschallschwingeinheit hergestellt werden kann, wobei vorzugsweise das Kopplungselement (8) in eine der Positionen elastisch vorgespannt ist, wobei besonders bevorzugt die Vorspannung mit Hilfe von zumindest einem Federelement erfolgt..

15. Ultraschallschweißanlage nach einem der Ansprüche 10 bis 14, **dadurch gekennzeichnet, dass** der Außenwulst (6) an der Sonotrode (1) oder an einem zwischen Sonotrode (1) und Konverter (3) angeordneten Amplitudentransformator (4) angeordnet ist, wobei vorzugsweise der Wulst (6) in einem Schwingungsknoten der Resonanzschwingung mit der Wellenlänge λ angeordnet ist.

## Claims

1. An ultrasonic welding installation comprising an ultrasonic vibration unit having a sonotrode (1) and a converter (3), wherein the sonotrode (1) and the converter (3) are arranged in mutually adjacent relationship along a longitudinal axis and are coordinated in such a way that the ultrasonic vibration unit is caused to resonate with an ultrasonic vibration in the direction of the longitudinal axis with a wavelength λ, wherein there can be provided an amplitude transformer (4) arranged between the sonotrode and the converter, wherein there is provided a holder (5) for holding the ultrasonic vibration unit, wherein the holder (5) has a clamping device which is reciprocable between an opened position in which the ultrasonic vibration unit can be removed from the holder (5) and a closed position in which the clamping device comes into contact with the ultrasonic vibration unit and exerts a force on same so that the ultrasonic vibration unit is held, **characterised in that** the clamping device is in the form of a sleeve having an inner and an outer surface, wherein the inner surface is of a configuration corresponding to an outer surface of a portion of the ultrasonic vibration unit, wherein the sleeve has a slot which connects the outer surface of the sleeve to the inner surface of the sleeve so that the sleeve has two mutually opposite slot walls (33, 34) which define the slot, wherein there is provided a tightening device with which the slot walls (33, 34) can be moved towards each other whereby the clamping device is moved into the closed position and the space enclosed by the inner surface is reduced and the ultrasonic vibration unit is clamped within the sleeve.

2. The ultrasonic welding installation according to claim 1 **characterised in that** in the closed position the clamping device comes into contact with the ultrasonic vibration unit at at least two mutually spaced holding points.

3. The ultrasonic welding installation according to claim 1 or claim 2 **characterised in that** the tightening device is a screw which engages through a through stepped bore provided in a slot wall into a threaded bore provided in another slot wall.

4. The ultrasonic welding installation according to one of claims 1 to 3 **characterised in that** a portion of the outer surface of the ultrasonic vibration unit and the inner surface of the sleeve are matched to each other such that when the slot walls (33, 34) are in contact with each other the ultrasonic vibration unit is securely held by the clamping device without plastic deformation of the ultrasonic vibration unit occurring.

5. The ultrasonic welding installation according to one of claims 1 to 4 **characterised in that** the ultrasonic vibration unit has an outer bead (6) with which the holding device (5) comes into contact in the closed position.

6. The ultrasonic welding installation according to claim 5 **characterised in that** the outer bead (6) is of a T-shaped cross-section with a leg and a flange extending at both sides at a right angle from an end of the leg, wherein preferably the flange has at least one peripheral collar with which the clamping device comes into contact in the closed position.

7. The ultrasonic welding installation according to one of claims 1 to 6 **characterised in that** the sonotrode (1) is connected to the converter (3) and/or the amplitude transformer (4) is connected to the converter (3) and/or the amplitude transformer (4) is connected to the sonotrode (1) by way of a positively locking connection which provides a positively locking relationship in all directions of the plane perpendicular to the longitudinal axis.

8. The ultrasonic welding installation according to claim 7 **characterised in that** the positively locking connection comprises a pin (22) and a corresponding opening (26), wherein preferably the pin (22) is arranged on the amplitude transformer (4) and the corresponding opening (26) is on the sonotrode (1) or the converter (3), wherein preferably the pin (22) and the corresponding opening (26) are of a rotationally symmetrical configuration about the longitudinal axis with a n-fold axis of rotation, wherein n is a natural number greater than one, wherein particularly preferably the sonotrode (1) is of a rotationally symmetrical configuration about the longitudinal axis with a m-fold axis of rotation and m is equal to n.

9. The ultrasonic welding installation according to one of claims 1 to 8 **characterised in that** there is provided a support element (7) for supporting a force applied to the sonotrode (1) perpendicularly to the longitudinal axis, wherein the sonotrode (1) and the support element (7) have mutually corresponding support surfaces which at least when a force is applied to the sonotrode perpendicularly to the longitudinal axis come into contact with each other, wherein the support surfaces are of such a configuration that when they are in contact with each other they prevent a relative movement of the sonotrode (1) with respect to the support element (7) in the direction of the longitudinal axis and do not impede a rotation of the sonotrode (1) about the longitudinal axis, wherein preferably the support element (7) is of such a configuration that it is reciprocable between two positions perpendicularly to the longitudinal axis, wherein particularly preferably there is provided a locking device with which the support element (7) can be locked in at least one position.

10. The ultrasonic welding installation according to claim 9 **characterised in that** the support element (7) is mounted to the holder (5).

11. The ultrasonic welding installation according to one of claims 1 to 10 when appendant to claim 5 **characterised in that** the holder (5) has an angle positioning device, wherein the outer bead (6) has at least one recess (21), wherein the angle positioning device has at least one projection (20) which corresponds to the recess (21) and which can engage into the recess (21) and thus provides the positively locking connection so that a rotation of the ultrasonic vibration unit about the longitudinal axis is prevented by the positively locking connection and a relative movement between the ultrasonic vibration unit and the holder (5) in the direction of the longitudinal axis is not prevented.

12. The ultrasonic welding installation according to claim 11 **characterised in that** the outer bead (6) has a plurality of recesses (21), wherein preferably the angle positioning device has a plurality of projections (20) corresponding to the plurality of recesses (21), wherein particularly preferably the ultrasonic vibration unit can be connected in positively locking relationship to the angle positioning device in a plurality of positions rotated relative to each other about the longitudinal axis.

13. The ultrasonic welding installation according to one of claims 11 and 12 **characterised in that** the at least one recess (21) of the outer bead (6) and the projection (20) of the angle positioning device have mutually corresponding contact surfaces which when the ultrasonic vibration unit is fitted into the angle positioning device come into contact with each other upon rotation of the ultrasonic vibration unit about the longitudinal axis, wherein preferably the contact surfaces of the recess (21) and/or the projection (20) are inclined relative to the longitudinal axis.

14. The ultrasonic welding installation according to one of claims 10 to 13 **characterised in that** the angle positioning device has a fixing element (9) for fixing the angle positioning device to a machine stand and has a coupling element (8) which is reciprocable between two positions in the direction of the longitudinal axis relative to the fixing element (9), wherein the positively locking connection can be produced between the coupling element (8) and the ultrasonic vibration unit, wherein preferably the coupling element (8) is elastically prestressed into one of the positions, wherein particularly preferably the prestressing is effected by means of at least one spring element.

15. The ultrasonic welding installation according to one of claims 10 to 14 **characterised in that** the outer bead (6) is arranged on the sonotrode (1) or an amplitude transformer (4) arranged between the sonotrode (1) and the converter (3), wherein preferably the bead (6) is arranged in a vibration node of the resonance vibration of the wavelength λ.

## Revendications

1. Installation de soudage par ultrasons avec une unité émettrice d'ultrasons qui comprend une sonotrode (1) et un convertisseur (3), la sonotrode (1) et le convertisseur (3) étant disposés l'un à côté de l'autre le long d'un axe longitudinal et étant adaptés l'un à l'autre de façon telle que l'unité émettrice d'ultrasons soit mise en résonance avec une oscillation d'ultrasons dans la direction de l'axe longitudinal avec une longueur d'onde λ, un transformateur d'amplitude (4) pouvant être prévu entre la sonotrode et le convertisseur, un support (5) pour tenir l'unité émettrice d'ultrasons étant prévue, le support (5) comprenant un dispositif de serrage qui peut alterner entre une position ouverte dans laquelle l'unité émettrice d'ultrasons peut être enlevé du support (5) et une position fermée dans laquelle le dispositif de serrage entre en contact avec l'unité émettrice d'ultrasons et exerce un effort sur celle-ci de façon que l'unité émettrice d'ultrasons soit tenue, **caractérisée en ce que** le dispositif de serrage est configuré comme un manchon avec une surface intérieure et une surface extérieure, la surface intérieure étant configurée de façon à correspondre à une surface extérieure d'une partie de l'unité émettrice d'ultrasons, le manchon comprenant une fente qui relie la surface extérieure du manchon à la surface intérieure du manchon si bien que le manchon comprenne deux parois de fente (33, 34) disposées en regard qui délimitent la fente, un dispositif tendeur étant prévu à l'aide duquel les parois de fentes (33, 34) peuvent être rapprochées l'une de l'autre, par laquelle action le dispositif de serrage peut être mis dans la position fermée et l'espace délimité par la surface intérieure peut être réduit et l'unité émettrice d'ultrasons est serrée à l'intérieur du manchon.

2. Installation de soudage par ultrasons selon la revendication 1, **caractérisée en ce que**, dans la position fermée, le dispositif de serrage entre en contact avec l'unité émettrice d'ultrasons à au moins deux points de maintien espacés l'un de l'autre.

3. Installation de soudage par ultrasons selon la revendication 1 ou 2, **caractérisée en ce que** le dispositif de serrage est une vis qui agit en passant par un trou à étapes de passage formé dans une paroi de fente et en entrant dans un taraudage formé dans une autre paroi de fente.

4. Installation de soudage par ultrasons selon l'une des revendications 1 à 3, **caractérisée en ce qu'**une zone de la surface extérieure de l'unité émettrice d'ultrasons et la surface intérieure du manchon sont adaptées l'une à l'autre de façon que, lorsque les parois de fente (33, 34) sont en contact l'une avec l'autre, l'unité émettrice d'ultrasons soit tenue de façon sûre par le dispositif de serrage sans qu'il en résulte une déformation plastique de l'unité émettrice d'ultrasons.

5. Installation de soudage par ultrasons selon l'une des revendications 1 à 4, **caractérisée en ce que** l'unité émettrice d'ultrasons est pourvue d'un bourrelet extérieur (6) avec lequel le support (5) entre en contact dans la position fermée.

6. Installation de soudage par ultrasons selon la revendication 5, **caractérisée en ce que** le bourrelet extérieur (6) a une section transversale en T avec une traverse et avec une bride s'étendant des deux côtés et à angle droit à partir d'une extrémité de la traverse, de préférence, la bride comprenant au moins une ceinture périphérique avec laquelle le dispositif de serrage entre en contact dans la position fermée.

7. Installation de soudage par ultrasons selon l'une des revendications 1 à 6, **caractérisée en ce que** la sonotrode (1) est reliée au convertisseur (3) et/ou le transformateur d'amplitude (4) est relié au convertisseur (3) et/ou le transformateur d'amplitude (4) est relié à la sonotrode (1) par une liaison par complémentarité de forme qui réalise une complémentarité de forme dans toutes les directions du plan perpendiculaire à l'axe longitudinal.

8. Installation de soudage par ultrasons selon la revendication 7, **caractérisée en ce que** la liaison par complémentarité de forme est constituée par un tenon (22) et un évidement (26) correspondant, de préférence, le tenon (22) étant agencé sur le transformateur d'amplitude (4) et l'évidement (26) correspondant étant sur la sonotrode (1) ou le convertisseur (3), de préférence, le tenon (22) et l'évidement (26) correspondant étant formés à symétrie de rotation autour de l'axe longitudinal avec un axe de rotation d'ordre n, n étant un nombre naturel supérieur à 1, de manière particulièrement préférée, la sonotrode (1) étant formée à symétrie de rotation autour de l'axe longitudinal avec un axe de rotation d'ordre m et m étant égal à n.

9. Installation de soudage par ultrasons selon l'une des revendications 1 à 8, **caractérisée en ce qu'**il est prévu un élément d'appui (7) pour un appui d'un effort exercé sur la sonotrode (1) perpendiculairement à l'axe longitudinal, la sonotrode (1) et l'élément d'appui (7) ayant des surfaces d'appui correspondant l'une l'autre qui entrent en contact l'une avec l'autre au moins lorsqu'un effort est exercé sur la sonotrode perpendiculairement à l'axe longitudinal, les surfaces d'appui étant configurés de façon telle que, lorsqu'elles sont en contact l'une avec l'autre, elles empêchent un mouvement relatif de la sonotrode (1) par rapport à l'élément d'appui (7) dans la direction de l'axe longitudinal et n'empêchent pas une rotation de la sonotrode (1) autour de l'axe longitudinal, de préférence, l'élément d'appui (7) étant configuré de façon qu'il puisse être déplacé entre deux positions perpendiculairement à l'axe longitudinal, de manière plus particulière, un dispositif de verrouillage étant prévu avec lequel l'élément d'appui (7) peut être verrouillé dans au moins une position.

10. Installation de soudage par ultrasons selon la revendication 9, **caractérisée en ce que** l'élément d'appui (7) est monté sur le support (5).

11. Installation de soudage par ultrasons selon l'une des revendications 1 à 10 dans la mesure où elles dépendent de la revendication 5, **caractérisée en ce que** le support (5) comprend un dispositif de positionnement angulaire, le bourrelet extérieur (6) comprenant au moins un évidement (21), le dispositif de positionnement angulaire comprenant au moins une avancée (20) correspondant à l'évidement (21) qui peut s'engager dans l'évidement (21) et réalise ainsi une liaison par complémentarité de forme, si bien qu'une rotation de l'unité émettrice d'ultrasons autour de l'axe longitudinal soit empêchée par la liaison par complémentarité de forme et qu'un mouvement relatif entre l'unité émettrice d'ultrasons et le support (5) dans la direction de l'axe longitudinal ne soit pas empêché.

12. Installation de soudage par ultrasons selon la revendication 11, **caractérisée en ce que** le bourrelet extérieur (6) comprend plusieurs évidements (21), de préférence, le dispositif de positionnement angulaire comprenant plusieurs avancées (20) correspondant auxdits plusieurs évidements (21), de manière particulièrement préférée, l'unité émettrice d'ultrasons pouvant être reliée au dispositif de positionnement angulaire par complémentarité de forme dans plusieurs positions tournées les unes par rapport aux autres autours de l'axe longitudinal.

13. Installation de soudage par ultrasons selon l'une des revendications 11 à 12, **caractérisée en ce que** ledit au moins un évidement (21) du bourrelet extérieur (6) et l'avancée (20) du dispositif de positionnement angulaire comprennent des surfaces de contact correspondant l'une à l'autre qui, lorsque l'unité émettrice d'ultrasons est insérée dans le dispositif de positionnement angulaire, entrent en contact l'une avec l'autre par rotation de l'unité émettrice d'ultrasons autours de l'axe longitudinal, de préférence, les surfaces de contact de l'évidement (21) et/ou de l'avancée (20) étant inclinées par rapport à l'axe longitudinal.

14. Installation de soudage par ultrasons selon l'une des revendications 10 à 13, **caractérisée en ce que** le dispositif de positionnement angulaire comprend un élément de fixation (9) pour une fixation du dispositif de positionnement angulaire sur un support de machine, et un élément d'accouplement (8) qui peut être déplacé, dans la direction de l'axe longitudinal relativement par rapport à l'élément de fixation (9), entre deux positions, la liaison par complémentarité de forme entre l'élément d'accouplement (8) et l'unité émettrice pouvant être réalisée, de préférence, l'élément d'accouplement (8) étant précontraint élastiquement dans une des positions, de manière particulièrement, la précontrainte étant effectuée à l'aide d'au moins un élément résilient.

15. Installation de soudage par ultrasons selon l'une des revendications 10 à 14, **caractérisée en ce que** le bourrelet (6) est disposé à la sonotrode (1) ou à un transformateur d'amplitude (4) disposé entre la sonotrode (1) et le convertisseur (3), de préférence, le bourrelet (6) étant disposé à un noeud d'oscillation de l'oscillation de résonance avec la longueur d'onde λ.
